# EUROPEAN PATENT APPLICATION

(11) **EP 2 028 747 A1**
(43) Date of publication of application: **25.02.2009**
(21) Application number: 07114869.6
(22) Date of filing: 23.08.2007
(51) Int. Cl.: H02K 21/16, H02K 29/03

(54) **Two-phase DC brushless motor**

(71) Applicant: Jeung, Young-Chun, Cypress, CA 90630 (US)
(72) Inventor: Jeung, Young-Chun, Cypress, CA 90630 (US)
(74) Representative: Rupp, Christian

(57) **Abstract**

Disclosed herein is a brushless DC motor which can improve efficiency and starting characteristics and reduce torque ripples and noise by maximally increasing a permeance coefficient of rotating magnetic field of the brushless DC motor. The brushless DC motor of the present invention comprises an armature formed with two-phase windings having 4xn poles and auxiliary salient poles, and a rotor constructed of permanent magnets, which has a three-phase rotor angle of 6xn rotating magnetic poles, so that it can be driven by the electric power transformation and electronic commutation control device for the two-phase brushless motor.

## Description

### BACKGROUND OF THE INVENTION

### Field of the Invention

The present invention relates to a brushless motor, and more particularly, to a two-phase and three-phase composite type brushless DC motor which can produce a torque having a phase difference of thirty degrees with a driving current for a two-phase brushless motor having a ninety degrees phase difference, thereby reducing torque pulsation of the brushless motor and increasing starting torque, as well as increasing a permeance coefficient of a rotor magnetic circuit rather than a rotor of a three-phase brushless motor having a phase difference of sixty degrees,.

### Background of the Related Art

In general, a brushless motor refers to a DC motor wherein a mechanical brush and a commutator have been modified into electric means. Accordingly, since such a brushless motor does not generate abrasion, dust and electric noise, and has good output and efficiency, it is appropriate for a high-speed rotation type motor, so that various researches and developments have been conducted on the next generation motor.

However, in case of the brushless motor, a rotor of a DC motor, around which coils are wound, is substituted with a permanent magnet, and a method of controlling the speed is switched from a voltage control type into an excitation phase control type, so that a driving circuit is required.

In general, a brushless motor comprises a rotor made of a permanent magnet, and an armature excited by means of commutated voltage of an electronic switching circuit.

In addition, a two-phase brushless motor is driven at electric excitation angle having a phase difference of ninety degrees, and comprises a rotor made of permanent magnet having 2×n poles, and an armature having 4×n pole windings.

Meanwhile, a three-phase brushless motor is driven at an excitation angle having a phase difference of sixty degrees, and comprises a rotor made of permanent magnet having a 2×n poles, and an armature having pole windings of 6×n.

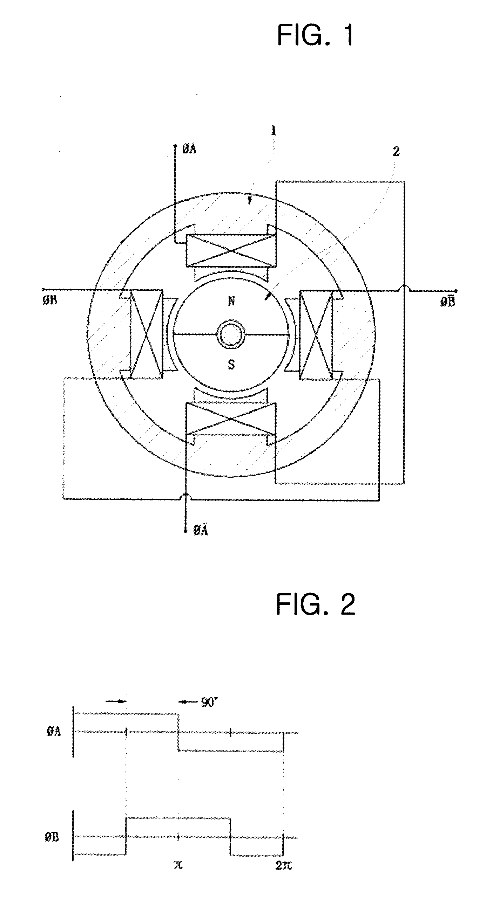

FIG. 1 is a view showing a transformation constitution of rotation power of a two-phase brushless motor, and FIG. 2 is a wave-form diagram of a torque showing a driving step of a conventional two-phase brushless motor. As shown in FIG. 2, the conventional two-phase brushless motor comprises a basic two-pole rotor 2, and an armature 1 having four-pole windings.

As shown in FIG. 2, the two-phase brushless motor produces a torque having a phase difference of ninety degrees.

In this instance, care is required to be taken of the driving circuit because winding current flows between an angle of 0 to 180 degrees and big current flows between 0 to 45 degrees due to small reverse electromotive force, and an angle of torque ripple is big.

In addition, it is preferable to shorten a distance between poles of permanent magnets of the rotor 2, widen a pole area of the armature 1 corresponding to a pole area of the permanent magnet of the rotor 2, and reduce an air gap, in order to maximally increase the permeance coefficient of the magnetic circuit of the motor, thereby utilizing the available magnetic energy.

However, since the two-phase brushless motor has been structurally constructed of a rotor 2 made of permanent magnet having 2×n poles, and an armature 1 having 4×n pole windings, the distance between the poles of the permanent magnet of the rotor 2 was longer than that of the winding poles of the armature, and the magnet area of the armature 1, which corresponds to the pole area of the permanent magnet, was small so that the permeance coefficient was small and the utilizing efficiency of the magnetic energy was low.

Accordingly, the two-phase brushless motor has a big torque ripple and a weak electromotive torque so that it was not appropriate for a big motor.

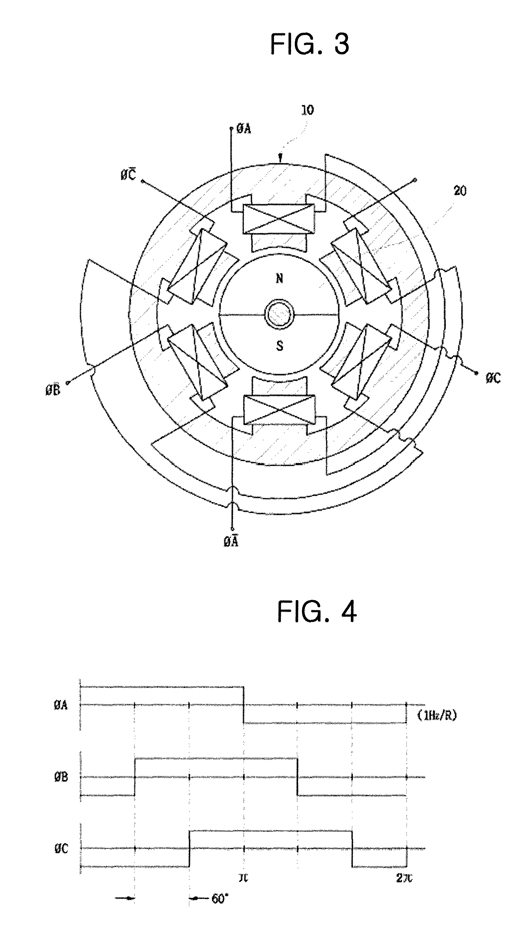

FIG. 3 is a view showing a transformation constitution of rotation power in a conventional three-phase brushless motor, and FIG. 4 is a view of a torque showing a driving step of the conventional brushless motor.

Meanwhile, as shown in FIG. 3, the conventional brushless motor comprises a basic two-pole rotor 20, and an armature 10 having six-pole windings.

In addition, as shown in FIG. 4, the three-phase brushless motor generates rotational torque with a phase difference of sixty degrees, and the winding current flows between 0 to 120 degrees, and a torque ripple angle with small reverse electromotive force is produced between 0 to 30 degrees.

While the three-phase brushless motor is preferable to the two-phase brushless motor, however, it should be constructed of a rotor 2 having 2×n poles, and an armature 10 having 6×n winding poles, so that the distance between the poles of the permanent magnet of the rotor 20 is long and the magnetic pole area of the armature, which corresponds to the pole area of the permanent magnet, is small. As a result, the permeance coefficient and the magnetic energy utilizing efficiency are not high.

Thus, in case of the conventional two-phase or three-phase brushless motor of a whole-wave bipolar excitation type, which is the optimum driving method, there was a limitation in utilizing the magnetic energy to the maximum in terms of the principal structure, and there was a structural problem in improving the efficiency.

### SUMMARY OF THE INVENTION

Accordingly, the present invention has been made to solve the above-mentioned problems occurring in the prior art, and it is a primary object of the present invention to provide a brushless motor which can comprise a rotor made of permanent magnet having more split poles than the winding poles of an armature so as to maximize an utilizing efficiency of the magnetic energy of the motor and minimize a phase difference of the rotation driving to thirty degrees, thereby improving a large-capacity torque characteristic of large volume and an efficiency.

Another object of the present invention is to provide a two-phase brushless motor which can construct a rotor to have 6xn permanent magnet poles, which are three times the basic 2xn poles of the conventional two-phase or three-phase motor so as to increase the permeance coefficient of the permanent magnet of the rotor and provide an armature having 4xn winding poles so that the armature can secure an area identical to an opposing area of the permanent magnet of the rotor to increase the permeance coefficient of an operating point of the armature pole, thereby utilizing the available magnetic energy to the maximum.

Still another object of the present invention is to provide a two-phase and three-phase composite type brushless motor which can construct a magnetic circuit, which can minimize cogging produced from the interactions of the rotors having 6xn poles by providing auxiliary salient poles between respective winding poles of the armature, and minimizes the windings of the armature to 4xn with respect to the rotating magnetic poles, thereby reducing operation loss and material cost.

To accomplish the above objects of the present invention, according to the present invention, there is provided a two-phase and three-phase composite type brushless DC motor comprising: an armature having two phase windings, the armature being formed with 4xn winding poles and auxiliary poles disposed between the winding poles; and a rotor constructed of 6xn three-phase permanent magnet rotating magnetic poles, each of which has identical split angles, characterized in that the winding poles of the armature are adapted to correspond to one pole surface of the rotating magnetic pole of the permanent magnet of the rotor.

### BRIEF DESCRIPTION OF THE DRAWINGS

The above and other objects, features and advantages of the present invention will be apparent from the following detailed description of the preferred embodiments of the invention in conjunction with the accompanying drawings, in which:

FIG.1 is a view showing a rotation power transforming constitution in a conventional two-phase brushless motor;

FIG. 2 is a diagram of a torque showing a driving step of the conventional brushless motor;

FIG. 3 is a view showing a transformation constitution of rotation power in a conventional three-phase brushless motor;

FIG. 4 is a diagram of a torque showing a driving step of the conventional brushless motor;

FIG. 5 is a view showing a transformation constitution of rotation power in a two-phase brushless motor (4S6R) of the present invention;

FIG. 6 is diagram of a torque showing a driving step of the two-phase brushless motor of the present invention;

FIG. 7 is a diagram showing an exemplary example of a driving circuit of the two-phase brushless motor of the present invention;

FIG. 8 is a diagram showing a change of a permeance coefficient of the brushless motor of the present invention.

### DETAILED DESCRIPTION OF THE PREFERRED EMBODIMENT

Hereinafter, the composite type brushless motor of the present invention will be described in detail with reference to the appended drawings.

The brushless motor of the present invention is characterized by comprising an armature having two-phase windings, the armature formed with 4×n winding poles and auxiliary poles positioned between the winding poles, and a rotor constructed of 6xn permanent magnet rotating magnetic poles, each of which has an identical split angle.

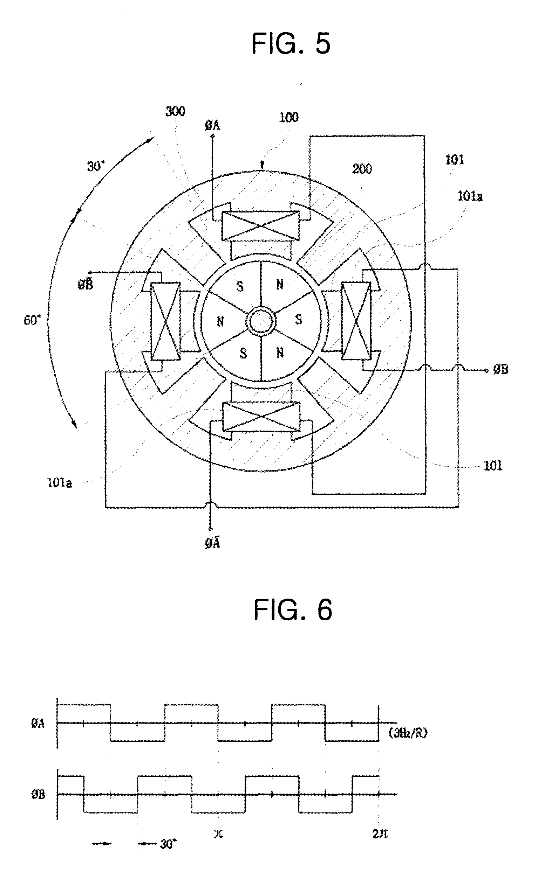

Thus, the present invention has a basic motor structure made by combining an armature having two-phase windings, which is formed with four winding poles, and a six-pole permanent magnet rotor divided into a sixty degrees split angle, and is made by combining an armature having 4xn poles, and a permanent magnet rotor having 6xn poles. Hereinafter, referring to FIG. 5 to FIG. 7, which shows the brushless motor having four-pole armature windings and six-pole rotating magnetic poles (4S6R), which are constructed of the basic unit of the present invention, the constitution and operation thereof will be described in detail as follows.

As shown in FIG. 5, the brushless motor of the present invention comprises an armature 100 constructed of four two-phase windings, a rotor 200 constructed of permanent magnets constituting a sixty degrees split angle, and four auxiliary poles 300 formed between respective winding poles 101 of the armature 100, wherein the armature 100 is constructed of winding poles 101 disposed at positions divided into ninety degrees, each of the winding poles having an area identical to that of the split surface of a pole of the permanent magnet of the rotor 200.

According to one embodiment of the present invention, the armature 100 constitutes four two-phase windings 101a by disposing respective winding pole 101, which has an area identical to that of the split surface of a pole of the permanent magnet of the rotor constituting the sixty degrees split angle, at a position divided into ninety degrees.

Accordingly, a marginal split angle of thirty degrees is produced between the winding poles 101 of the armature 100, and the auxiliary poles 300 are formed within the split marginal angle between the winding poles 101 of the armature 100, and the size of the surface of the auxiliary pole 300 is determined to be a size including 2∼3 mm for inserting the winding coil.

The rotor 200 is constructed by alternatively disposing six permanent magnet poles having sixty degrees split angle into an N-pole and an S-pole.

The windings 101a of the armature 100 is made by inserting two-phase windings ∮A, ∮B having a phase difference of ninety degrees into a slot of the winding pole 101 of the respective armature 100.

As shown in FIG. 6, the characteristic of the excitation current of respective phase of the two-phase brushless motor, which is formed with auxiliary poles as described above, is to have a phase difference of thirty degrees/step, and has a switching frequency characteristic of 3Hz/phase per one revolution.

Thus, the brushless motor of the present invention has very stable torque and starting characteristics, since the rotation step angle is small, in comparison with the excitation current characteristic of the two-phase brushless motor having a phase difference of conventional ninety degrees/step as shown in FIG. 2, and the three-phase brushless motor having a phase difference of sixty degrees/step as shown in FIG. 4.

The two-phase brushless motor of the present invention has 4×n armature poles and 6×n rotor poles, so that it is possible to fabricate a motor combined of eight-pole armature and twelve-pole rotating magnetic poles having thirty degrees split poles or of twelve-pole armature and eighteen-pole rotating magnetic poles having a twelve degrees split angle.

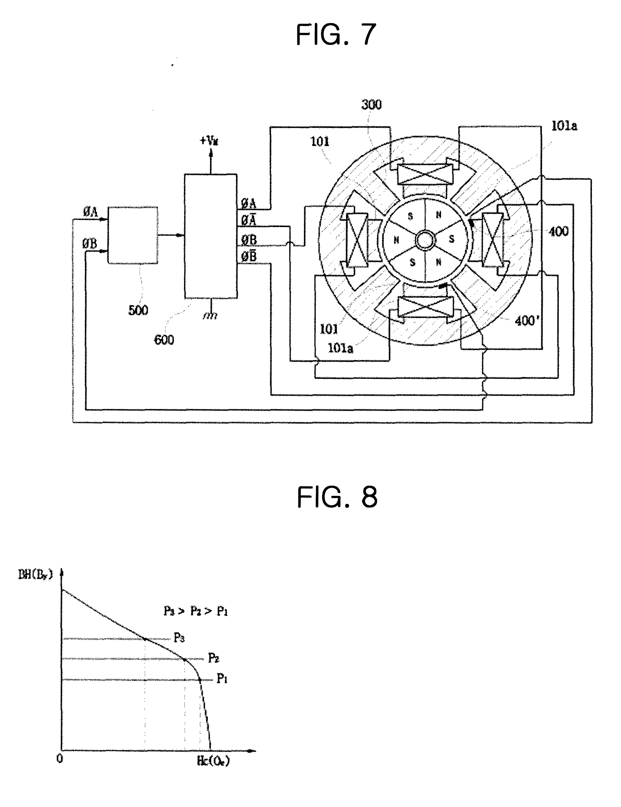

FIG. 8 is a view showing a change of permeance coefficients of the brushless motor of the present invention. As shown in FIG. 8, a permeance coefficient P3 of the rotor of the permanent magnet of the present invention, which has more split poles than the winding poles of the armature, is higher than a permeance coefficient P1 of the conventional two-phase brushless motor and a permeance coefficient P2 of the conventional three-phase brushless motor, so that it is possible to effectively design the brushless motor which can utilize the available magnetic energy of the motor to the maximum.

FIG. 7 is a diagram showing an example of a driving circuit of the two-phase brushless motor of the present invention. As shown in FIG. 7, the driving circuit of the two-phase brushless motor of the present invention comprises rotor position detection sensors 400, 400', a two-phase logic circuit 500 for generating two-phase excitation switching signals according to the position of the rotor, which is detected by the rotor position detection sensors 400, 400', and a switching circuit 600 for operating the motor by flowing current in the two-phase windings of the armature 100 according to the two-phase excitation switching signals of the two-phase logic circuit 500, thereby operating the two-phase brushless motor of the present invention.

As described above, the present invention applies the two-phase driving device to the two-phase and three-phase composite type brushless motor, thereby obtaining more finely divided torque angles than the three-phase brushless motor, so that it is possible to obtain stable and strong starting torque and rotating characteristics, in particular, it is possible to obtain stable and high efficiency characteristics at low and medium speed.

In addition, it is possible to utilize the available magnetic energy effectively, thereby capable of reducing the design size of the motor, and reducing the windings of the armature and the coils, resulting in the reduction of the volume and weight thereof, so that it is possible to improve the economic property by reducing the production cost.

While the present invention has been described with reference to the particular illustrative embodiments, it is not to be restricted by the embodiments but only by the appended claims. It is to be appreciated that those skilled in the art can change or modify the embodiments without departing from the scope and spirit of the present invention.

## Claims

1. A two-phase and three-phase composite type brushless DC motor comprising: an armature having two-phase windings, the armature being formed with 4xn winding poles and auxiliary poles disposed between the winding poles; and a rotor constructed of 6xn three-phase permanent magnet rotating magnetic poles, each of which has an identical split angle, **characterized in that** the winding poles of the armature are adapted to correspond to one pole surface of the rotating magnetic pole of the permanent magnet of the rotor.

2. The brushless motor according to claim 1, wherein the auxiliary poles are provided in consideration of spaces for inserting the coils wound around the winding poles in a marginal angle formed between the winding poles.
